# EUROPEAN PATENT SPECIFICATION

(11) **EP 3 683 718 B1**
(45) Date of publication and mention of the grant of the patent: **12.11.2025**
(21) Application number: 19152482.6
(22) Date of filing: 18.01.2019
(51) Int. Cl.: G06V 20/58

(54) **DRIVER ASSISTANCE SYSTEM AND METHOD FOR A MOTOR VEHICLE**
FAHRERASSISTENZSYSTEM UND -VERFAHREN FÜR EIN MOTORFAHRZEUG
SYSTÈME D'ASSISTANCE AU CONDUCTEUR ET PROCÉDÉ POUR VÉHICULE À MOTEUR

(43) Date of publication of application: 22.07.2020
(73) Proprietor: Qualcomm Auto Ltd., Cambridge CB4 0WZ (GB)
(72) Inventor: EIDEHALL, Andreas, 583 30 Linköping (SE); MEDLEY, Fredrik, 583 30 Linköping (SE); ZETTERLUND, Per, 583 30 Linköping (SE)
(74) Representative: Reddie & Grose LLP

(56) References cited:
- EP-A1- 3 279 830
- LONG QIAN ET AL: "Small Object Detection Based on Stereo Vision", INTERNATIONAL JOURNAL OF AUTOMOTIVE ENGINEERING, 1 January 2016 (2016-01-01), pages 9 - 14, XP055591700, Retrieved from the Internet <URL:https://pdfs.semanticscholar.org/ad16/ed89f933c81b5da6c277d015c99e516f1c35.pdf> DOI: 10.20485/jsaeijae.7.1_9
- RICK SALAY ET AL: "Using Machine Learning Safely in Automotive Software: An Assessment and Adaption of Software Process Requirements in ISO 26262", ARXIV.ORG, CORNELL UNIVERSITY LIBRARY, 201 OLIN LIBRARY CORNELL UNIVERSITY ITHACA, NY 14853, 5 August 2018 (2018-08-05), XP081183588
- KELLER CHRISTOPH GUSTAV ET AL: "Dense Stereo-Based ROI Generation for Pedestrian Detection", 9 September 2009, IMAGE ANALYSIS AND RECOGNITION : 11TH INTERNATIONAL CONFERENCE, ICIAR 2014, VILAMOURA, PORTUGAL, OCTOBER 22-24, 2014, PROCEEDINGS, PART I; IN: LECTURE NOTES IN COMPUTER SCIENCE , ISSN 1611-3349 ; VOL. 8814; [LECTURE NOTES IN COMPUTER SCIENCE; LECT.NO, ISBN: 978-3-642-17318-9, XP047380370
- MAYANK BANSAL ET AL: "A real-time pedestrian detection system based on structure and appearance classification", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA, 3 May 2010 (2010-05-03), pages 903 - 909, XP031743776, ISBN: 978-1-4244-5038-1

## Description

The invention relates to a driver assistance system for a motor vehicle, comprising a stereo imaging apparatus with a plurality of imaging devices adapted to capture images from a surrounding of the motor vehicle, and a processing device adapted to generate, or to have access to, a 3D point cloud of the environment in the field of view of the imaging apparatus, and to perform image processing of images captured by said imaging apparatus, wherein said image processing comprises an object detector adapted to detect objects in images captured by said imaging apparatus. The invention also relates to a corresponding driver assistance method.

Typically, detected objects or obstacles are used by an Autonomous Emergency Brake (AEB) system to brake the car automatically before collision. However, if a false object is reported, this could lead to an inadvertent automatic braking which could generate a hazardous situation.

The ISO standard 25252, defining Automotive Safety Integrity Levels (ASIL) of functional safety, demands that electrical errors must not lead to such a hazard, and provides help in how to design a system to reduce this risk.

One such solution, if a detection software is running on hardware that is considered unsafe (QM or ASIL-A level of ISO 25252), is to monitor this detection software with a verification software that runs on hardware that is considered safe (for example, ASIL-A, ASIL-B, ASIL-C or ASIL-D under ISO 25252).

Existing solutions currently monitor that the detection software does not output false objects, since that was the main hazard of previous AEB systems. The driver was still considered to be in the loop, i.e., to be able to react in the case of the system failing to detect an object. Now, moving towards autonomous driving, the hazard of failing to detect an object is becoming equally, or even more, critical, since the driver might be out of the loop, i.e., unable to react in the case of the system failing to detect an object.

Further relevant prior art is:
Long Qian et al: "Small object detection Based on Stereo Vision", International Journal of Automotive Engineering, 1 January 2016; and
the document EP3279830.

The objective underlying the present invention is to provide a system and method improving automotive safety by reducing the hazard of failing to detect an object or obstacle in the path of the motor vehicle.

The invention solves this object with the features of the independent claims.

According to the invention, a road profile detector is provided which is adapted to detect the profile of the road ahead of the motor vehicle and to calculate a road-object profile from a combination of the detected road profile and objects detected by said object detector, and a verification algorithm having a higher functional safety level than the object detector.

The verification algorithm is adapted to compare the road-object profile with a corresponding part of the 3D point cloud, and to determine a malfunction based on the comparison of the road-object profile with a corresponding part of the 3D point cloud.

The invention comprises an object detection software capable of detecting objects within the vision field of view of the imaging apparatus; a road profile detection software capable of detection the road profile, in particular the elevation and/or lateral tilt angle of the road as a function of the distance in front of the host vehicle, or the inverse function thereof; and a verification software that is considered safe, or runs on hardware that is considered safe, from an ISO 25252 perspective. The verification software uses a 3D point cloud as generated by the stereo vision system or algorithm, or from a different sensor, like a LIDAR sensor. The verification software uses the 3D point cloud and compares with output from the road profile detector.

As a result, the invention allows to verify that the object detection software does not, due to an electrical error, fail to detect an object truly present in the vehicle environment.

The road profile is determined as the elevation and/or the lateral tilt angle of the road as a function of the distance d, or the inverse distance 1/d, to the imaging apparatus. Advantageously, the lateral tilt angle of the road is determined and taken into account in the road profile determination, since the road profile does not have to be constant over the width (lateral dimension) of the image.

The road-object profile is calculated from the road profile and the detected objects, using the boxes enclosing the detected objects (so-called bounding boxes). The use of bounding boxes representing a complex detected object simplifies the calculation of the road-object profile.

The verifier determines a malfunction if the number of points from the 3D point cloud deviating from the road-object profile exceeds a predetermined threshold. I.e., if sufficiently many 3D points deviate from this expected distance, it is concluded that either the road-object profile is wrong, or that there is in fact an object extending from the road surface.

To reduce computational complexity, the verification software may be run only on a small critical part of the full image, for instance on the host vehicle lane, or an area in front of the vehicle determined by a path prediction algorithm.

The object detection software needs to measure the position, speed, size and type of a detected object and is typically very computationally expensive.

The verification software, on the other hand, only needs to determine if, or if not, there is an object/road profile error at a given distance. It does not need to measure the exact position, the speed or the type of any object, and may thus be less computationally costly. This allows it to run on a safe hardware which may have lower computational power.

In a preferred embodiment, the verification algorithm has ASIL-B, ASIL-C or ASIL-D functional safety level. The object detector may have QM or ASIL-A functional safety level under ASIL standard. The road profile detector may for example have ASIL-A, ASIL-B, ASIL-C or ASIL-D functional safety level in certain embodiments, or QM functional safety level under ASIL standard in other embodiments.

The verifier is preferably capable of recognizing an object detected by the object detector as a false object or artefact, i.e. an object not really present in the vehicle environment, in particular if such detected object is determined by the verifier to float with a distance above the road. Alternatively, or in addition, an object detected by the object detector may be recognized as a false object if the road-object profile comprises a horizontal discontinuity at the lower end of the object.

In the following the invention shall be illustrated on the basis of preferred embodiments with reference to the accompanying drawings, wherein:
- Fig. 1: shows a schematic view of a driver assistance system;
- Fig. 2: is a flow diagram illustrating a driver assistance method;
- Fig. 3: shows an image of a region in front of the host vehicle captured by an imaging apparatus;
- Fig. 4: shows a schematic side view of a vehicle having a driver assistance system; and
- Fig. 5: shows a diagram of the road elevation over the inverse distance with a curve representing the road profile.

The driver assistance system 10 is adapted to be mounted in or to a motor vehicle and comprises an imaging apparatus 11 for capturing images of a region surrounding the motor vehicle, for example a region in front of the motor vehicle. The imaging apparatus may be mounted for example behind the windscreen or in the radiator grille. The imaging apparatus 11 comprises a plurality of optical imaging devices 12, in particular cameras, preferably operating in the visible and/or infrared wavelength range. The plurality of imaging devices 12 form a stereo imaging apparatus 11.

The imaging apparatus 11 is coupled to an on-board data processing device 14 adapted to process the image data received from the imaging apparatus 11. The data processing device 14 is preferably a digital device which is programmed or programmable and preferably comprises a microprocessor, a microcontroller, a digital signal processor (DSP), and/or a microprocessor part in a System-On-Chip (SoC) device, and preferably has access to, or comprises, a digital data memory 25. The data processing device 14 may comprise a dedicated hardware device, like a Field Programmable Gate Array (FPGA) or an Application Specific Integrated Circuit (ASIC), or an FPGA and/or ASIC part in a System-On-Chip (SoC) device, for performing certain functions, for example controlling the capture of images by the imaging apparatus 11, receiving the electrical signal containing the image information from the imaging apparatus 11, rectifying or warping pairs of left/right images into alignment and/or creating disparity or depth images. The data processing device 14, or part of its functions, can be realized by a System-On-Chip (SoC) device comprising, for example, FPGA, DSP, ARM and/or microprocessor functionality. The data processing device 14 and the memory device 25 are preferably realised in an on-board electronic control unit (ECU) and may be connected to the imaging apparatus 11 via a separate cable or a vehicle data bus. In another embodiment the ECU and one or more of the imaging devices 12 can be integrated into a single unit, where a one box solution including the ECU and all imaging devices 12 can be preferred. All steps from imaging, image processing to possible activation or control of safety device 18 are performed automatically and continuously during driving in real time.

Image and data processing carried out in the processing device 14 advantageously comprises identifying and preferably also classifying possible objects (object candidates) in front of the motor vehicle, such as pedestrians, other vehicles, bicyclists and/or large animals, tracking over time the position of objects or object candidates identified in the captured images, and activating or controlling at least one safety device 18 depending on an estimation performed with respect to a tracked object, for example on an estimated collision probability.

The safety device 18 may comprise at least one active safety device and/or at least one passive safety device. In particular, the safety device 18 may comprise one or more of: at least one safety belt tensioner, at least one passenger airbag, one or more restraint systems such as occupant airbags, a hood lifter, an electronic stability system, at least one dynamic vehicle control system, such as a brake control system and/or a steering control system, a speed control system; a display device to display information relating to a detected object; a warning device adapted to provide a warning to a driver by suitable optical, acoustical and/or haptic warning signals.

The invention is applicable to autonomous driving, where the host vehicle is an autonomous vehicle adapted to drive partly or fully autonomously or automatically, and driving actions of the driver are partially and/or completely replaced or executed by the host vehicle.

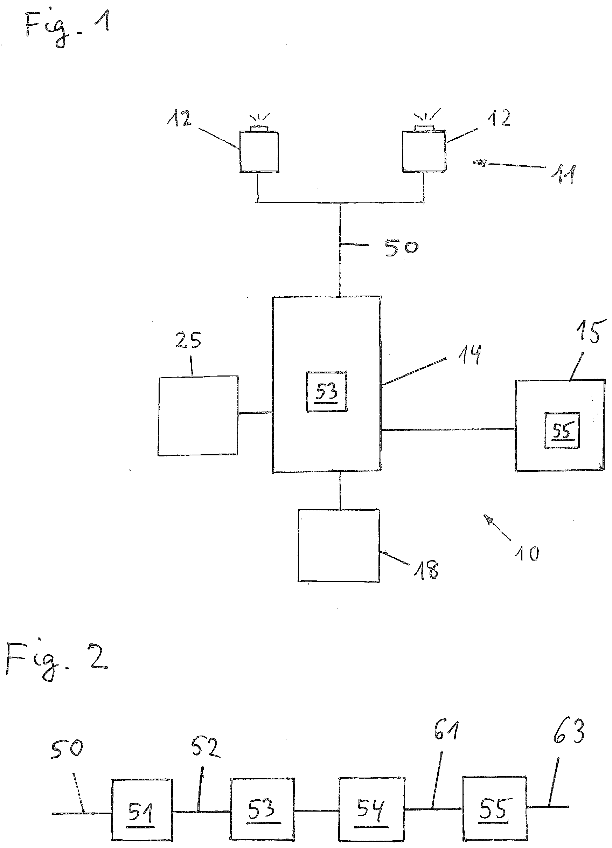

A verification method according to the invention will be explained in the following with refence to Figures 2 to 5.

On the basis of images 50 from the imaging devices 12, a stereo algorithm 51 calculates a 3D point cloud 52 for each pair of left/right images 50.

The 3D point cloud 52 contains information for each pixel of the 2D image about the distance of the part of the environment imaged by that particular pixel to the imaging devices 12. In particular, the 3D point cloud may have the form of a depth map or disparity map.

The 3D point cloud 52 alternatively originates from data provided by a different sensor, like a LIDAR sensor. In this case, the 3D point cloud 52 is either calculated by the processing device 14 from data of the LIDAR sensor. Otherwise, the 3D point cloud 52 calculated by a different processing device is stored in the data memory 52, to which the processing device 14 has access.

On the basis of the 3D point cloud 52, an object detector 53 is adapted to detect objects 64, 65 in the environment of the motor vehicle, like other vehicles, pedestrians, bicycles / bicyclists, large animals etc. In the present example it shall be assumed that the object detector has missed the detection of object 64 which is in fact present in front of the host vehicle (false negative), and has erroneously detected object 65 which is in fact not present in front of the host vehicle (false positive). The object detector 53 outputs a bounding box 70 for every detected object 65, which usually is a planar, vertically oriented rectangle, to which one depth or distance value is assigned for every detected object 65.

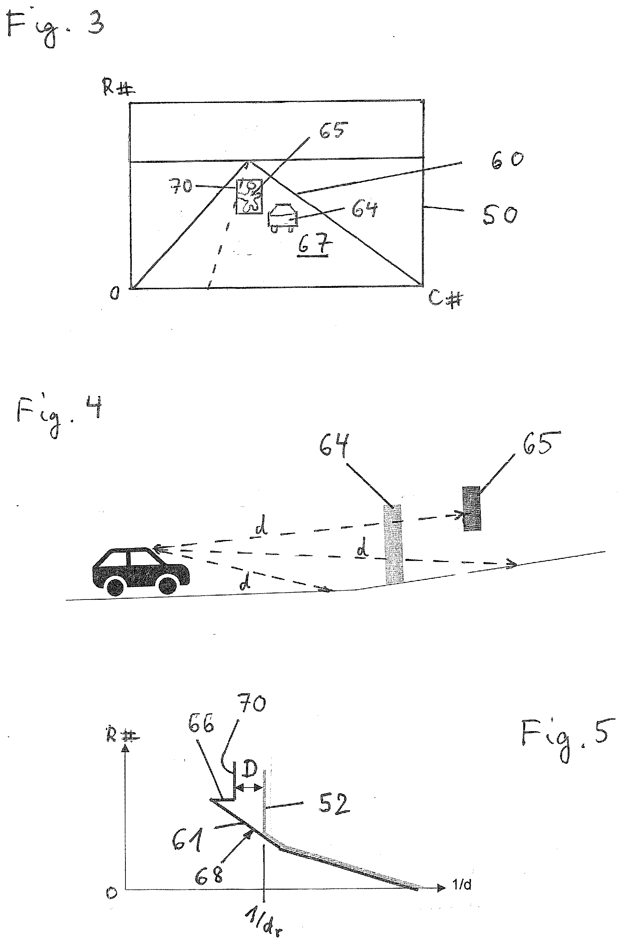

On the basis of the 3D point cloud 52, a road profile detector 54 is adapted to detect a road profile 61, i.e. a profile of the road 60 ahead of the motor vehicle (see Figure 3).

The road profile 61 is for example the elevation h of road, measured for example in units of image row number R#, as a function of the distance d (or 1/d) in front of the host vehicle, see Figure 4. Alternatively, the road profile 61 is for example inverse function, i.e. the distance d (or 1/d) in front of the host vehicle, as a function of the elevation h of road. In addition or as an alternative to the elevation h of road, the lateral tilt angle of the road can be used in the determination of the road profile 61.

In order to determined the road profile 61, a road detector may be provided in the object detector 53 or in the road profile detector 54. The road detector is adapted to detect the road 60 in the images. For every pixel in a relevant part of the image 50, in particular in a road part of the image 50 as determined by road detector, the road profile detector 54 determines two values, namely elevation and distance, of the determined road 60 in any suitable manner, which gives the road profile function 61 shown in Figure 5, being the elevation as a function the distance, or inverse distance.

Although not shown in the Figures, it can be preferable to detect, and take into account in the road profile estimation, the lateral tilt angle of the road, alternatively or in addition to the determination of the elevation of the road.

The road profile detector 54 combines the road profile 61 and the bounding boxes 70 of the detected objects and thus obtains a road-object profile 68, see Figure 5. For each pixel in a relevant part of the image 50, the road-object profile 68 gives an expected distance value d (or 1/d). In Figure 5, for example, the road profile 61 is shown as a curve in a diagram showing of the row number R# over 1/d for a particular column of the captured image 50. It shall be understood, however, that the road profile 61 and the road-object profile 68 will generally vary over the image columns, and extends over a plurality, or even all, image columns. Therefore, Figure 5 shall be understood to show a section through the road profile 61 and the road-object profile 68 extending over a plurality of image columns. In other words, the road profile 61 and the road-object profile 68 are generally two-dimensional surfaces in a row number - column number - depth (1/d) diagram. However, it is not excluded that the road profile 61 and the road-object profile 68 are constant over the image columns if a representation without lateral tilt of the road 60 is chosen.

The road-object profile 68 determined by the road profile detector 54 is output to the verifier 55. The verifier 55 compares the road-object profile 68 with corresponding parts of the 3D point cloud. In particular, every point of the road-object profile 68 is compared with a corresponding point of the 3D point cloud 52.

The difference between the road-object profile 68 and the 3D point cloud 52 is that the former is determined by the object detector 53 and the road profile detector 54 involving dedicated detection algorithms based on image processing of the stereo images 50, while the 3D point cloud 52 is directly generated from sensor data, for example by the stereo algorithm, without further transformations.

The verifier 55 determines the difference D (see Figure 5) between every two corresponding pixels of the road-object profile 68 and the 3D point cloud 52. If the determined difference D exceeds a predetermined threshold, the verifier 55 determines that the corresponding pixel deviates from the expected distance d, i.e. from the corresponding pixel of the road-object profile 68. If the number of pixels deviating from the expected distance d exceeds a predetermined threshold, the verifier 55 estimates a fault condition and sets an output flag 63 to a fault value, for example "1". On the other hand, if the number of 3D point cloud pixels deviating from the expected distance d does not exceed a predetermined threshold, the verifier 55 estimates a non-fault condition and sets an output flag 63 to a non-fault value, for example "0".

Specifically, if a fault condition is determined by the verifier 55, it may be concluded that either the road-object profile 68 is wrong, or that there is in fact a real object 64 extending from the road surface, which however has been missed to be detected by the object detector 53. By marking a fault condition through setting the output flag 63, missed detections of real objects 64 in front of the host vehicle are recognized and can be treated in a suitable manner, for example by initiating further evaluation. Another suitable action may for example be to slow down or brake the vehicle, in order to gain more time to evaluate the object when approaching.

From Figure 4 it can be seen that also the detection of a false object 65 due to for example an electrical error can be recognized by the verifier 55. The false object 65 seems to float in a distance above the road surface (Figure 4), leading to a characteristic horizontal discontinuity 66 or jump in the road-object profile 68, see Figure 5.

The distance d_r of the imaging apparatus 12 or the host vehicle to the real object 64 which has been missed to be detected by the object detector 53 (or the error in the road-object profile 68) can be estimated using the position 1/d_r of the points of the 3D point cloud 52 in the region of the true object 64, which shows up as a vertical section in the 3D point cloud 52 (see Figure 5).

The verifier 55 has a functional safety level being higher than the functional safety level of the object detector 53. In particular, the object detector 53 may have QM or ASIL-A functional safety level under ASIL standard (ISO 25252), while the verifier 55 may preferably have ASIL-B, ASIL-C or ASIL-D functional safety level. This may be advantageously be achieved by running the verifier 55 on a safe data processing hardware 15 (see Figure 1), i.e. a hardware having a higher functional safety level, for example ASIL-B functional safety level, than the data processing device 14 running at least the object detector 53, which may for example have QM functional safety level under ISO 52526 standard. As another example, the verifier 55 may have ASIL-D function al safety level, while the object detector 53 may for example have ASIL-A functional safety level under ISO 52526 standard. Other combinations are possible.

Summarizing the above, the object detection software 53 usually needs to estimate the position, speed, size and type of any detected object and is typically very computationally expensive.

The verification software 55, on the other hand, only needs to determine if, or if not, there is an object/road profile error at a given distance d. It does not need to measure the exact position, the speed or the type of any object, and may thus be less computationally costly. This allows it to run on a safe hardware under ISO 52526 standard which may have lower computational power.

To reduce computational complexity, the verifier 55 may preferably be run on a small critical part of the full image 50, only, for instance the lane 67 (see Figure 3) of the road 60 on which the host vehicle moves, or an area in front of the host vehicle determined for example by a path prediction algorithm.

Another way to reduce the computational complexity may be to only run the algorithm on parts of the image that are closer than the first detected object in each image column.

## Claims

1. A driver assistance system for a motor vehicle, comprising a stereo imaging apparatus (11) with a plurality of cameras (12) adapted to capture pairs or left/right images from a surrounding of the motor vehicle, and a processing device (14) adapted to generate a 3D point cloud (52) of the environment in the field of view of the imaging apparatus (11) using a stereo algorithm to calculate the 3D point cloud for each pair of left/right images, and to perform image processing of images captured by said imaging apparatus (11), wherein said image processing comprises an object detector (53) adapted to detect objects in the images captured by said imaging apparatus (11) and to output a bounding box and a depth value for every detected object, **characterized in that** said image processing comprises a road profile detector (54) adapted to detect the profile (61) of the road ahead of the motor vehicle, wherein the road profile (61) is determined as the elevation and/or the lateral tilt angle of the road as a function of the distance d, or the inverse distance 1/d, to the imaging apparatus (11), or the inverse function thereof, and to calculate a road-object profile (68) from a combination of the detected road profile (61) and the depth values of the objects detected by said object detector (53) wherein for each pixel in the image the road-object profile gives an expected distance value d (or 1/d), and a verification algorithm (55) having a higher functional safety level than said object detector (53), wherein said verification algorithm (55) is adapted to compare the road-object profile (68) with a corresponding part (52) of the 3D point cloud (52), and to determine a malfunction based on said comparison of the road-object profile (68) with a corresponding part (52) of the 3D point cloud (52), wherein the verifier (55) determines a malfunction if the number of points (52) from the 3D point cloud (52) deviating from the road-object profile (68) exceeds a predetermined threshold.

2. The driver assistance system as claimed in any one of the preceding claims, **characterized in that** the distance of the imaging apparatus (11) to a true object, which has been failed to be detected by the object detector (53), is estimated using the position 1/d_r of the deviating points in the 3D point cloud (52).

3. The driver assistance system as claimed in any one of the preceding claims, **characterized in that** the verifier (55) is run on a small critical part of the full image (50), only, for instance on the host vehicle lane (67), or an area in front of the host vehicle determined for example by a path prediction algorithm.

4. The driver assistance system as claimed in any one of the preceding claims, **characterized in that** an object detected by the object detector (53) is recognized as a false object (65) if it is determined by the verifier (55) to float above the road (60).

5. The driver assistance system as claimed in any one of the preceding claims, **characterized in that** an object detected by the object detector (53) is recognized as a false object (65) if the road-object profile (68) exhibits a horizontal discontinuity (66) at the lower end of the object (65).

6. The driver assistance system as claimed in any one of the preceding claims, **characterized in that** said verification algorithm (55) has ASIL-A, ASIL-B, ASIL-C or ASIL-D functional safety level.

7. The driver assistance system as claimed in any one of the preceding claims, **characterized in that** said object detector (53) has QM or ASIL-A functional safety level under ASIL standard.

8. The driver assistance system as claimed in any one of the preceding claims, **characterized in that** said road profile detector (54) has ASIL-B functional safety level or QM functional safety level under ASIL standard.

9. A driver assistance method for a motor vehicle, comprising capturing pairs of left/ right images from a surrounding of the motor vehicle, generating a 3D point cloud (52) of the vehicle environment using a stereo algorithm to calculate the 3D point cloud for each pair of left/right images, and performing image processing of captured images, wherein said image processing comprises detecting objects in the captured images by an object detector (53) and to output a bounding box and a depth value for every detected object, **characterized in that** said image processing comprises detecting the profile (61) of the road ahead of the motor vehicle by a road profile detector (54), wherein the road profile (61) is determined as the elevation and/or the lateral tilt angle of the road as a function of the distance d, or the inverse distance 1/d, to the imaging apparatus (11), or the inverse function thereof, calculating a road-object profile (68) from a combination of the detected road profile (61) and the depth values of the objects detected by said object detector (53) wherein for each pixel in the image the road-object profile gives an expected distance value d (or 1/d), and comparing the road-object profile (68) with a corresponding part (52) of the 3D point cloud (52) by a verification algorithm (55), wherein the verification algorithm (55) has a higher functional safety level than said object detector (53), and determining a malfunction based on said comparison of the road-object profile (68) with a corresponding part (52) of the 3D point cloud (52) wherein a malfunction is determined if the number of points (52) from the 3D point cloud (52) deviating from the road-object profile (68) exceeds a predetermined threshold.

## Patentansprüche

1. Fahrerassistenzsystem für ein Kraftfahrzeug, das Folgendes umfasst: eine Stereo-Bildgebungsvorrichtung (11) mit mehreren Kameras (12), ausgelegt zum Aufnehmen von Paaren oder [sic] linken/rechten Bildern aus einer Umgebung des Kraftfahrzeugs, und ein Verarbeitungsgerät (14), ausgelegt zum Erzeugen einer 3D-Punktwolke (52) der Umgebung im Sichtfeld der Bildgebungsvorrichtung (11) mittels eines Stereoalgorithmus, um die 3D-Punktwolke für jedes Paar von linken/rechten Bildern zu berechnen und Bildverarbeitung an von der genannten Bildgebungsvorrichtung (11) aufgenommenen Bildern durchzuführen, wobei die genannte Bildverarbeitung einen Objektdetektor (53) umfasst, ausgelegt zum Erkennen von Objekten in den von der genannten Bildgebungsvorrichtung (11) aufgenommenen Bildern und zum Ausgeben eines Begrenzungsrahmens und eines Tiefenwerts für jedes erkannte Objekt, **dadurch gekennzeichnet, dass** die genannte Bildverarbeitung einen Straßenprofildetektor (54) umfasst, ausgelegt zum Erkennen des Profils (61) der vor dem Kraftfahrzeug liegenden Straße, wobei das Straßenprofil (61) als die Erhebung und/oder der seitliche Neigungswinkel der Straße als Funktion der Distanz d oder der inversen Distanz 1/d zur Bildgebungsvorrichtung (11) oder deren Umkehrfunktion bestimmt wird, und zum Berechnen eines Straßenobjektprofils (68) aus einer Kombination des erkannten Straßenprofils (61) und der Tiefenwerte der von dem genannten Objektdetektor (53) erkannten Objekte, wobei das Straßenobjektprofil für jedes Pixel im Bild einen erwarteten Distanzwert d (oder 1/d) liefert, und einen Verifizierungsalgorithmus (55) mit einem höheren funktionalen Sicherheitsniveau als der genannte Objektdetektor (53), wobei der genannte Verifizierungsalgorithmus (55) ausgelegt ist zum Vergleichen des Straßenobjektprofils (68) mit einem entsprechenden Teil (52) der 3D-Punktwolke (52) und zum Bestimmen einer Fehlfunktion auf der Basis des genannten Vergleichs des Straßenobjektprofils (68) mit einem entsprechenden Teil (52) der 3D-Punktwolke (52), wobei der Verifizierer (55) eine Fehlfunktion feststellt, wenn die Anzahl der vom Straßenobjektprofil (68) abweichenden Punkte (52) aus der 3D-Punktwolke (52) einen vorgegebenen Schwellenwert überschreitet.

2. Fahrerassistenzsystem nach dem vorherigen Anspruch, **dadurch gekennzeichnet, dass** die Distanz der Bildgebungsvorrichtung (11) zu einem tatsächlichen Objekt, das vom Objektdetektor (53) nicht erkannt wurde, anhand der Position 1/d_r der abweichenden Punkte in der 3D-Punktwolke (52) geschätzt wird.

3. Fahrerassistenzsystem nach einem der vorherigen Ansprüche, **dadurch gekennzeichnet, dass** der Verifizierer (55) nur an einem kleinen kritischen Teil des Gesamtbildes (50) ausgeführt wird, beispielsweise auf der Hostfahrzeugspur (67) oder einem Bereich vor dem Hostfahrzeug, der beispielsweise durch einen Pfadvorhersagealgorithmus bestimmt wird.

4. Fahrerassistenzsystem nach einem der vorherigen Ansprüche, **dadurch gekennzeichnet, dass** ein vom Objektdetektor (53) erkanntes Objekt als falsches Objekt (65) erkannt wird, wenn es vom Verifizierer (55) als über der Straße (60) schwebend festgestellt wird.

5. Fahrerassistenzsystem nach einem der vorherigen Ansprüche, **dadurch gekennzeichnet, dass** ein vom Objektdetektor (53) erkanntes Objekt als falsches Objekt (65) erkannt wird, wenn das Straßenobjektprofil (68) am unteren Ende des Objekts (65) eine horizontale Diskontinuität (66) aufweist.

6. Fahrerassistenzsystem nach einem der vorherigen Ansprüche, **dadurch gekennzeichnet, dass** der genannte Verifizierungsalgorithmus (55) die funktionale Sicherheitsstufe ASIL-A, ASIL-B, ASIL-C oder ASIL-D hat.

7. Fahrerassistenzsystem nach einem der vorherigen Ansprüche, **dadurch gekennzeichnet, dass** der genannte Objektdetektor (53) eine funktionale Sicherheitsstufe QM oder ASIL-A gemäß dem ASIL-Standard aufweist.

8. Fahrerassistenzsystem nach einem der vorherigen Ansprüche, **dadurch gekennzeichnet, dass** der genannte Straßenprofildetektor (54) die funktionale Sicherheitsstufe ASIL-B oder die funktionale Sicherheitsstufe QM gemäß dem ASIL-Standard hat.

9. Fahrerassistenzverfahren für ein Kraftfahrzeug, das Folgendes beinhaltet: Aufnehmen von Paaren von linken/rechten Bildern aus einer Umgebung des Kraftfahrzeugs, Erzeugen einer 3D-Punktwolke (52) der Fahrzeugumgebung mittels eines Stereoalgorithmus zum Berechnen der 3D-Punktwolke für jedes Paar von linken/rechten Bildern und Durchführen einer Bildverarbeitung an aufgenommenen Bildern, wobei die genannte Bildverarbeitung das Erkennen von Objekten in den aufgenommenen Bildern durch einen Objektdetektor (53) beeinhaltet, und Ausgeben eines Begrenzungsrahmens und eines Tiefenwerts für jedes erkannte Objekt, **dadurch gekennzeichnet, dass** die genannte Bildverarbeitung Folgendes beinhaltet: Erkennen des Profils (61) der vor dem Kraftfahrzeug liegenden Straße durch einen Straßenprofildetektor (54), wobei das Straßenprofil (61) als die Erhebung und/oder der seitliche Neigungswinkel der Straße als Funktion der Distanz d oder der inversen Distanz 1/d zur Bildgebungsvorrichtung (11) oder deren Umkehrfunktion bestimmt wird, Berechnen eines Straßenobjektprofils (68) aus einer Kombination des erkannten Straßenprofils (61) und der Tiefenwerte der von dem genannten Objektdetektor (53) erkannten Objekte, wobei das Straßenobjektprofil für jedes Pixel im Bild einen erwarteten Distanzwert d (oder 1/d) liefert, und Vergleichen des Straßenobjektprofils (68) mit einem entsprechenen Teil (52) der 3D-Punktwolke (52) durch einen Verifizierungsalgorithmus (55), wobei der Verifizierungsalgorithmus (55) ein höheres funktionales Sicherheitsniveau hat als der genannte Objektdetektor (53), und Bestimmen einer Fehlfunktion auf der Basis des genannten Vergleichs des Straßenobjektprofils (68) mit einem entsprechenden Teil (52) der 3D-Punktwolke (52), wobei eine Fehlfunktion festgestellt wird, wenn die Anzahl der vom Straßenobjektprofil (68) abweichenden Punkte (52) aus der 3D-Punktwolke (52) einen vorgegebenen Schwellenwert überschreitet.

## Revendications

1. Système d'assistance au conducteur pour un véhicule à moteur, comprenant un appareil d'imagerie stéréo (11) comptant une pluralité de caméras (12) conçues pour capturer des paires ou d'images gauche/droite d'un environnement du véhicule à moteur, et un dispositif de traitement (14) conçu pour générer un nuage de points 3D (52) de l'environnement dans le champ de vision de l'appareil d'imagerie (11) à l'aide d'un algorithme stéréo pour calculer le nuage de points 3D pour chaque paire d'images gauche/droite, et réaliser un traitement d'image d'images capturées par ledit appareil d'imagerie (11), dans lequel ledit traitement d'image comprend un détecteur d'objets (53) conçu pour détecter des objets dans les images capturées par ledit appareil d'imagerie (11) et produire une boîte englobante et une valeur de profondeur pour chaque objet détecté, **caractérisé en ce que** ledit traitement d'image comprend un détecteur de profil de route (54) conçu pour détecter le profil (61) de la route devant le véhicule à moteur, dans lequel le profil de route (61) est déterminé comme l'élévation et/ou l'angle d'inclinaison latérale de la route en tant que fonction de la distance d, ou de la distance inverse 1/d, par rapport à l'appareil d'imagerie (11), ou de sa fonction inverse, et pour calculer un profil route-objets (68) à partir d'une combinaison du profil de route détecté (61) et des valeurs de profondeur des objets détectés par ledit détecteur d'objets (53), dans lequel pour chaque pixel dans l'image, le profil route-objets donne une valeur de distance attendue d (ou l/d), et un algorithme de vérification (55) ayant un niveau de sécurité fonctionnelle plus élevé que celui dudit détecteur d'objets (53), dans lequel ledit algorithme de vérification (55) est conçu pour comparer le profil route-objets (68) à une partie correspondante (52) du nuage de points 3D (52), et déterminer un dysfonctionnement sur la base de ladite comparaison du profil route-objets (68) à une partie correspondante (52) du nuage de points 3D (52), dans lequel le vérificateur (55) détermine un dysfonctionnement si le nombre de points (52) du nuage de points 3D (52) s'écartant du profil route-objets (68) dépasse un seuil prédéterminé.

2. Système d'assistance au conducteur selon l'une quelconque des revendications précédentes, **caractérisé en ce que** la distance de l'appareil d'imagerie (11) par rapport à un objet réel, qui n'a pas été détecté par le détecteur d'objets (53), est estimée à l'aide de la position 1/d_r des points divergents dans le nuage de points 3D (52).

3. Système d'assistance au conducteur selon l'une quelconque des revendications précédentes, **caractérisé en ce que** le vérificateur (55) est appliqué sur une petite partie critique de l'image complète (50), uniquement, par exemple sur la voie du véhicule hôte (67), ou une zone située devant le véhicule hôte déterminée par exemple par un algorithme de prédiction de trajectoire.

4. Système d'assistance au conducteur selon l'une quelconque des revendications précédentes, **caractérisé en ce qu'**un objet détecté par le détecteur d'objets (53) est reconnu comme un faux objet (65) si le vérificateur (55) détermine qu'il flotte au-dessus de la route (60).

5. Système d'assistance au conducteur selon l'une quelconque des revendications précédentes, **caractérisé en ce qu'**un objet détecté par le détecteur d'objets (53) est reconnu comme un faux objet (65) si le profil route-objets (68) présente une discontinuité horizontale (66) au niveau de l'extrémité inférieure de l'objet (65).

6. Système d'assistance au conducteur selon l'une quelconque des revendications précédentes, **caractérisé en ce que** ledit algorithme de vérification (55) a un niveau de sécurité fonctionnelle ASIL-A, ASIL-B, ASIL-C ou ASIL-D.

7. Système d'assistance au conducteur selon l'une quelconque des revendications précédentes, **caractérisé en ce que** ledit détecteur d'objets (53) a un niveau de sécurité fonctionnelle QM ou ASIL-A conforme à la norme ASIL.

8. Système d'assistance au conducteur selon l'une quelconque des revendications précédentes, **caractérisé en ce que** ledit détecteur de profil de route (54) a un niveau de sécurité fonctionnelle ASIL-B ou un niveau de sécurité fonctionnelle QM selon la norme ASIL.

9. Procédé d'assistance au conducteur pour un véhicule à moteur, comprenant la capture de paires d'images gauche/droite d'un environnement du véhicule à moteur, la génération d'un nuage de points 3D (52) de l'environnement du véhicule à l'aide d'un algorithme stéréo pour calculer le nuage de points 3D pour chaque paire d'images gauche/droite, et la réalisation d'un traitement d'images capturées, dans lequel ledit traitement d'image comprend la détection d'objets dans les images capturées par un détecteur d'objets (53) et la délivrance en sortie d'une boîte englobante et d'une valeur de profondeur pour chaque objet détecté, **caractérisé en ce que** ledit traitement d'image comprend la détection du profil (61) de la route devant le véhicule à moteur par un détecteur de profil de route (54), dans lequel le profil de route (61) est déterminé comme l'élévation et/ou l'angle d'inclinaison latérale de la route en tant que fonction de la distance d, ou de la distance inverse 1/d, par rapport à l'appareil d'imagerie (11), ou de sa fonction inverse, le calcul d'un profil route-objets (68) à partir d'une combinaison du profil de route détecté (61) et des valeurs de profondeur des objets détectés par ledit détecteur d'objets (53), dans lequel pour chaque pixel dans l'image, le profil route-objets donne une valeur de distance attendue d (ou 1/d), et la comparaison du profil route-objets (68) avec une partie correspondante (52) du nuage de points 3D (52) par un algorithme de vérification (55), dans lequel l'algorithme de vérification (55) a un niveau de sécurité fonctionnelle supérieur à celui dudit détecteur d'objets (53), et la détermination d'un dysfonctionnement sur la base de ladite comparaison du profil route-objets (68) à une partie correspondante (52) du nuage de points 3D (52), dans lequel un dysfonctionnement est déterminé si le nombre de points (52) du nuage de points 3D (52) s'écartant du profil route-objets (68) dépasse un seuil prédéterminé.
